# DEMANDE DE BREVET EUROPEEN

(11) **EP 1 616 750 A1**
(43) Date de publication de la demande: **18.01.2006**
(21) Numéro de dépôt: 05300491.7
(22) Date de dépôt: 20.06.2005
(51) Int. Cl.: B60N 3/06, B60R 21/04

(54) **Tapis de plancher de véhicule**

(30) Priorité: 29.06.2004 FR 0407119
(71) Demandeur: RENAULT S.A.S., 92100 Boulogne Billancourt (FR)
(72) Inventeur: Bouillon, Jean-Charles, 78340, LES CLAYES SOUS BOIS (FR)

(57) **Abrégé**

Tapis (20) de plancher de véhicule comportant une portion adaptée à recouvrir un matériau de recouvrement du plancher, le tapis comportant au moins un élément de retenue (40) adapté à coopérer avec un organe fixe (18) du véhicule, le tapis étant retenu par rapport au plancher par ledit organe. Une zone (32) du matériau est susceptible d'être soumise à un effort transmis par au moins un pied (34) d'un utilisateur lors d'un choc, la zone étant susceptible de se déformer en passant d'une position de repos à une position déformée avec absorption d'énergie, la zone du matériau étant mobile par rapport à l'organe lors du passage de la position de repos à la position déformée. Le tapis (20) comporte un moyen de déformation (42) autorisant le déplacement du tapis par rapport à l'organe fixe (18) lors de la déformation de la zone (32). Agencement d'habillage de plancher de véhicule comportant un tel tapis. Véhicule comportant un tel agencement d'habillage.

## Description

La présente invention se rapporte à un tapis de plancher de véhicule.

Elle concerne en particulier un tel tapis qui comporte une portion adaptée à recouvrir un matériau de recouvrement du plancher, le tapis comportant au moins un élément sa retenue par rapport au plancher par un organe solidaire du plancher. Le tapis recouvre en particulier une zone du matériau susceptible d'être soumise à un effort transmis par au moins un pied d'un utilisateur lors d'un choc, tel qu'un grave accident. La zone est susceptible de se déformer en passant d'une position de repos à une position déformée avec absorption d'énergie, la zone du matériau étant mobile par rapport à l'organe lors du passage de la position de repos à la position déformée.

Comme la zone du matériau doit absorber de l'énergie, au bénéfice de la sécurité de l'usage dont le pied transmet l'effort lors du choc, le tapis ne doit pas s'opposer à la déformation de ladite zone.

L'invention vise à améliorer le tapis pour optimiser la sécurité du véhicule dans lequel il est destiné à être installé dans un agencement d'habillage de recouvrement de plancher. L'invention vise à améliorer un tel tapis pour optimiser la sécurité du véhicule sans pour autant nuire à l'apparence ou à la longévité du tapis.

L'invention a pour objet un tapis de plancher de véhicule comportant une portion adaptée à recouvrir un matériau de recouvrement du plancher. Le tapis comporte au moins un élément de retenue adapté à coopérer avec un organe fixe du véhicule, le tapis étant retenu par rapport au plancher par ledit organe. Une zone du matériau est susceptible d'être soumise à un effort transmis par au moins un pied d'un utilisateur lors d'un choc. La zone est susceptible de se déformer en passant d'une position de repos à une position déformée avec absorption d'énergie. La zone du matériau est mobile par rapport à l'organe lors du passage de la position de repos à la position déformée. Le tapis comporte un moyen de déformation autorisant le déplacement du tapis par rapport à l'organe fixe lors de la déformation de la zone.

Avantageusement, le tapis pouvant se déplacer lors de la déformation de la zone, il n'empêche pas la déformation pour absorption d'énergie.

L'effort étant longitudinal au tapis, le moyen de déformation peut être longitudinal et/ou transversal.

Le moyen de déformation peut être adjacent à l'élément de retenue.

Le moyen de déformation peut être une portion frangible du tapis et/ou une fente dans le tapis.

L'élément de retenue peut être un trou adapté à être traversé par l'organe fixe.

L'invention a également pour objet un agencement d'habillage de recouvrement de plancher comportant un matériau de recouvrement du plancher, un organe fixe du véhicule coopérant avec un élément de retenue du tapis, le tapis étant retenu par rapport au plancher par ledit organe. Une zone du matériau est susceptible d'être soumise à un effort transmis par au moins un pied d'un utilisateur lors d'un choc. La zone est susceptible de se déformer en passant d'une position de repos à une position déformée avec absorption d'énergie. La zone du matériau est mobile par rapport à l'organe lors du passage de la position de repos à la position déformée. L'agencement est caractérisé en ce qu'il comporte un tapis comme défini précédemment.

L'invention a également pour objet un véhicule qui comporte un agencement comme défini précédemment, l'agencement étant un dispositif de sécurité.

Dans le véhicule, l'organe fixe peut être un organe de fixation de siège sur le plancher et/ou une partie d'un bac de rangement situé dans une cave à pied du véhicule.

D'autres caractéristiques et avantages de l'invention apparaîtront clairement à la lecture de la description suivante du mode de réalisation non limitatif de celle-ci, en liaison avec les dessins annexés sur lesquels :
- la figure 1 est une section schématique d'un véhicule, au niveau d'organes de fixations de siège, avec un tapis selon l'invention,
- la figure 2 est une vue schématique de dessus correspondant à la figure 1, montrant des moyens de déformation du tapis selon l'invention,
- la figure 3 est une section schématique d'un véhicule, au niveau d'un bac de rangement situé dans une cave à pied du véhicule, avec un tapis selon l'invention,
- la figure 4 est une vue schématique de dessus correspondant à la figure 3, montrant les moyens de déformation du tapis selon l'invention.

Dans la description qui va suivre, la direction désignée L est la direction longitudinale correspondant à l'axe d'avancement d'un véhicule, la direction désignée T est transversale, la direction désignée V est verticale. L'axe L est orienté de l'avant vers l'arrière du véhicule, l'axe T de la gauche vers la droite et l'axe V du bas vers le haut.

Traditionnellement, un véhicule automobile est équipé d'un plancher 10 en tôle avec des traverses 12 sur lesquelles sont fixés des rails de siège 16 par l'intermédiaires de vis 18 qui forment un organe fixe du véhicule.

Un tapis 20, visible par les utilisateurs, recouvre un matériau de recouvrement 22 du plancher.

Dans la cave à pied 26 du véhicule, en particulier au niveau de repose pieds, le matériau de recouvrement 22 sert à absorber de l'énergie en cas d'accident afin d'aider à préserver l'intégrité des membres inférieurs 30 d'un usager assis sur le siège 16 lors de l'accident. Dans la cave à pied 26, une portion du tapis 20 recouvre une zone 32 du matériau 22 susceptible d'être soumise à un effort transmis par au moins un pied 34 de l'usager lors d'un choc résultant de l'accident.

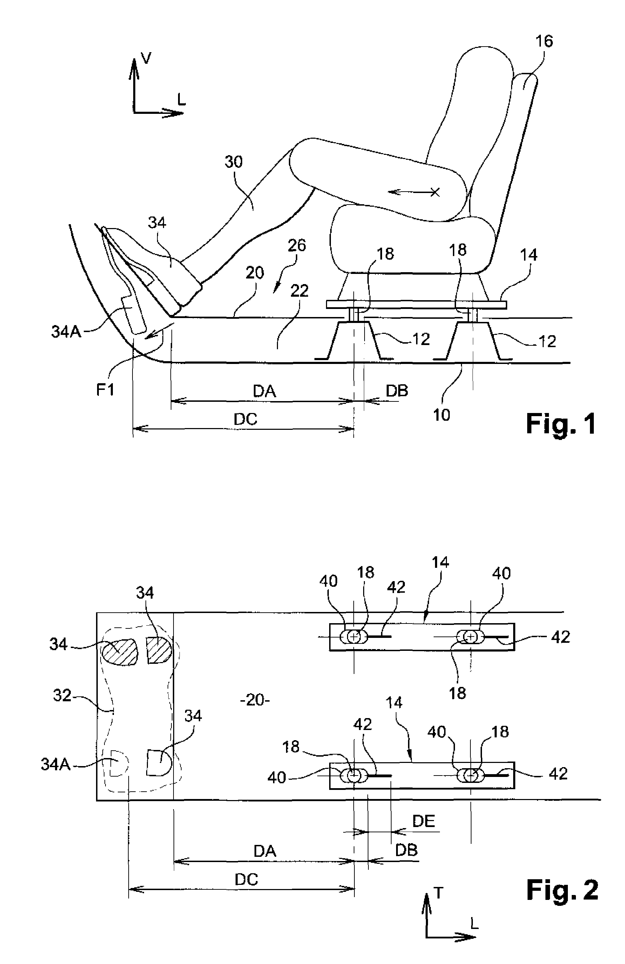

La zone 32, indiquée en trait pointillé à la figure 2, est susceptible de se déformer en passant d'une position de repos à une position déformée avec absorption d'énergie lors du choc. La zone 32 du matériau 22 est mobile par rapport à l'organe 18 lors du passage de la position de repos à la position déformée. La zone 32 est mobile selon la flèche F1 de la figure 1. Dans la position de repos, le pied 34 repose simplement sur le tapis 20, sans déformation ni du tapis, ni du matériau 22. Dans la position déformée, le pied est enfoncé dans le matériau 22, comme représenté à la figure 1 sur laquelle le pied enfoncé porte le numéro 34A. Sur la figure 2, le talon de chaussure du pied 34 est représenté en trait plein dans la position d'utilisation normale du pied 34 sur le repose-pied et en traits pointillés dans la position d'enfoncement du pied 34A dans le matériau 22.

Le tapis 20 comporte, à distance de la portion adaptée à recouvrir la zone 32, des trous 40 adaptés à être traversés par les organes fixes formés par les vis 18. Les trous 40 sont dissimulés par les rails 14. Ils ont une forme oblongue permettant un ajustement sur le matériau 22. Le tapis 20 est retenu, par rapport au plancher 10 par les vis 18, pour éviter de glisser tant longitudinalement que transversalement en usage normal du tapis 20. Il y a un jeu de longueur DB entre l'axe de chaque vis 18 et l'extrémité arrière du trou 40 correspondant. Chaque trou 42 constitue avantageusement un élément de retenue coopérant avec un organe fixe.

Dans la position déformée du matériau 22, le tapis 20 doit aussi être déformé pour suivre la déformation du matériau 22. En effet, comme la capacité d'absorption du matériau 22 est proportionnelle à l'enfoncement, le tapis 20 ne doit pas s'opposer à l'enfoncement, ce qui aurait pour effet d'augmenter l'effort nécessaire à l'enfoncement lors d'un accident.

Le tapis 20 comporte un moyen de déformation, à savoir des fentes 42. Les fentes 42 sont placées à l'arrière des trous 40. Les fentes 42 sont placées longitudinalement et permettent le déplacement du tapis 20 en cas de choc. Les fentes 42 sont raccordées aux trous 40, auxquels elles sont donc adjacentes. Ainsi, quand la traction sur la portion tapis 20 recouvrant la zone 32 est supérieure à un seuil déterminé, les vis 18 peuvent être engagées dans les fentes 42. Le tapis 20 peut donc coulisser longitudinalement sous l'effet de l'effort transmis par les pieds de l'usager lors de l'accident, sans augmenter l'effort d'enfoncement du pied 34A dans le matériau 22.

La longueur de la fente 42 d'un trou 40 est définie en utilisant les formules suivantes : DC=(DA+DB)*E et DE=(DA+DB+DE)*E

Dans ces formules, E est le coefficient d'étirement du tapis. DE est la longueur de la fente. DC est la distance séparant l'axe de la vis 18 du trou 40 considéré et l'arrière du talon du pied 34A en position déformée du matériau 22. DA est la distance séparant l'axe de la vis 18 et l'arrière du talon du pied 34 en position non déformée du matériau 22. DB est la longueur du jeu séparant l'axe de la 18 du trou 40 considéré et l'extrémité arrière du trou 40.

Dans l'exemple représenté, il y a quatre vis 18, quatre trous 40 et quatre fentes 42 correspondantes. Dans une variante de réalisation, les fentes 42 sont aménagées seulement sur les trous 40 situés à l'avant du siège.

Dans l'exemple considéré, les fentes 42 sont des découpes traversant le tapis 20 de part en part. Dans une variante de réalisation, les fentes sont remplacées par des portions frangibles prévues pour se découper sous l'action d'une traction d'intensité déterminée.

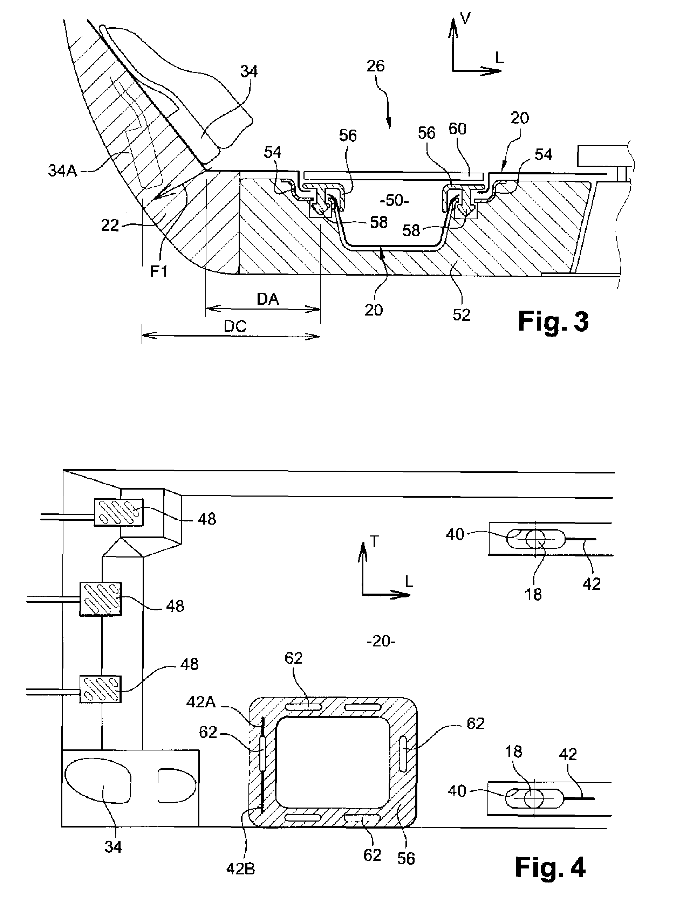

Dans certains véhicules, la cave à pied 26 comporte un bac de rangement 50, comme représenté aux figures 3 et 4. Dans ce cas, l'organe fixe est une partie du bac de rangement 50.

Le bac de rangement 50 est monté dans un bloc 52 d'habillage de fond de cave distinct du matériau 22, qui s'étend sensiblement au niveau du repose-pied et sous les pédales 48. Le fond du bac 50 est constitué par un creux dans le tapis 20. Le bac 50 comporte un rebord inférieur 54 solidaire du bloc 52, par exemple par collage. Le tapis 20 repose sur le rebord inférieur 54. Le bac 50 comporte un rebord supérieur 56 muni de crochets 58 d'encliquetage dans le rebord inférieur 54. Le rebord supérieur 56 comporte une ouverture centrale pour ménager un accès au fond du bac 50 et former le pourtour intérieur de la cavité de rangement du bac 50. Le rebord supérieur recouvre le tapis 20 au niveau de l'ouverture centrale. Le bac 50 comporte un couvercle 60 de fermeture coopérant avec le rebord supérieur 56.

Le tapis 20 étant pris en sandwich entre le rebord inférieur 54 et le rebord supérieur 56, des trous 62 oblongs du tapis permettent le passage des crochets 58.

Le crochet 58 situé sur le rebord avant du bac 50 constitue l'organe fixe du bac 50 pour lequel le tapis 20 comporte des moyens de déformation. Ici, les moyens de déformation sont des fentes 42A et 42B raccordées au trou 62 situé sur le bord avant du creux du tapis dans la cavité du bac de rangement 50. Les fentes 42A et 42B sont ici transversales. Les fentes permettent l'agrandissement du trou avant 62 lors de l'enfoncement du pied dans le matériau 22. L'agrandissement du trou 62 permet le glissement du tapis 20 nécessaire au travail d'absorption d'énergie du matériau 22.

Même dans le cas dans lequel le tapis 20 comporte des moyens de déformation au niveau du bac de cave à pied, des moyens de déformation au niveau des ancrages de sièges peuvent être présents sous la forme de fentes 42.

Avantageusement, les moyens de déformation selon l'invention n'entament pas la résistance du tapis.

## Revendications

1. Tapis (20) de plancher (10) de véhicule comportant une portion adaptée à recouvrir un matériau (22) de recouvrement du plancher, le tapis comportant au moins un élément de retenue (40, 62) adapté à coopérer avec un organe fixe (18, 58) du véhicule, le tapis étant retenu par rapport au plancher par ledit organe, une zone (32) du matériau étant susceptible d'être soumise à un effort transmis par au moins un pied (34) d'un utilisateur lors d'un choc, la zone étant susceptible de se déformer en passant d'une position de repos à une position déformée avec absorption d'énergie, la zone du matériau étant mobile par rapport à l'organe lors du passage de la position de repos à la position déformée, **caractérisé en ce que** le tapis (20) comporte un moyen de déformation (42, 42A, 42B) autorisant le déplacement du tapis par rapport à l'organe fixe (18, 58) lors de la déformation de la zone (32).

2. Tapis selon la revendication 1, **caractérisé en ce que** l'effort étant longitudinal au tapis (20), le moyen de déformation (42, 42A, 42B) est longitudinal.

3. Tapis selon la revendication 1, **caractérisé en ce que** l'effort étant longitudinal au tapis (20), le moyen de déformation (42, 42A, 42B) est transversal.

4. Tapis selon l'une quelconque des revendications précédentes, **caractérisé en ce que** le moyen de déformation (42, 42A, 42B) est adjacent à l'élément de retenue (40, 62).

5. Tapis selon l'une quelconque des revendications précédentes, **caractérisé en ce que** le moyen de déformation (42, 42A, 42B) est une portion frangible du tapis (20).

6. Tapis selon l'une quelconque des revendications précédentes, **caractérisé en ce que** le moyen de déformation (42, 42A, 42B) est une fente dans le tapis (20).

7. Tapis selon l'une quelconque des revendications précédentes, **caractérisé en ce que** l'élément de retenue (40, 62) est un trou adapté à être traversé par l'organe fixe (18, 58).

8. Agencement d'habillage de recouvrement de plancher comportant un matériau (22) de recouvrement du plancher (10), un organe fixe (18, 58) du véhicule coopérant avec un élément de retenue d'un tapis (20), le tapis étant retenu par rapport au plancher par ledit organe, une zone (32) du matériau étant susceptible d'être soumise à un effort transmis par au moins un pied (34) d'un utilisateur lors d'un choc, la zone (32) étant susceptible de se déformer en passant d'une position de repos à une position déformée avec absorption d'énergie, la zone (32) du matériau étant mobile par rapport à l'organe (18, 58) lors du passage de la position de repos à la position déformée, **caractérisé en ce qu'**il comporte un tapis (20) selon l'une quelconque des revendications précédentes.

9. Véhicule **caractérisé en ce qu'**il comporte un agencement selon la revendication précédente, l'agencement étant un dispositif de sécurité.

10. Véhicule selon la revendication précédente, **caractérisé en ce que** l'organe fixe (18) est un organe de fixation d'un siège (16) sur le plancher.

11. Véhicule selon l'une quelconque des revendications précédentes, **caractérisé en ce que** l'organe fixe (58) est une partie d'un bac (50) de rangement situé dans une cave à pied (26) du véhicule.
